(19) Europäisches Patentamt
European Patent Office
Office européen des brevets

(11) **EP 2 377 653 B1**

(12) **EUROPEAN PATENT SPECIFICATION**

(45) Date of publication and mention
of the grant of the patent:
**06.09.2017 Bulletin 2017/36**

(51) Int Cl.:
*B66C 13/18* (2006.01)     *B66C 23/00* (2006.01)
*E02F 9/22* (2006.01)      *E04G 21/04* (2006.01)
*E02F 3/43* (2006.01)

(21) Application number: **10803866.2**

(22) Date of filing: **23.06.2010**

(86) International application number:
**PCT/CN2010/074306**

(87) International publication number:
**WO 2011/012033 (03.02.2011 Gazette 2011/05)**

(54) **METHOD AND SYSTEM FOR CONTROLLING LARGE-SCALE ENGINEERING MANIPULATOR**

VERFAHREN UND SYSTEM ZUR STEUERUNG EINES GROSSEN
VERARBEITUNGSMANIPULATORS

PROCÉDÉ ET SYSTÈME DE COMMANDE D'UN MANIPULATEUR TECHNIQUE DE GRANDE
ÉCHELLE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **28.07.2009 CN 200910161663**

(43) Date of publication of application:
**19.10.2011 Bulletin 2011/42**

(73) Proprietors:
• **Hunan Sany Intelligent Control Equipment Co.,
Ltd**
**Hunan 410100 (CN)**
• **Sany Heavy Industry Co., Ltd.**
**Changsha**
**Hunan 410100 (CN)**

(72) Inventors:
• **ZHOU, Xiang**
**Hunan 410100 (CN)**
• **SHI, Peike**
**Hunan 410100 (CN)**
• **HUANG, Gang**
**Hunan 410100 (CN)**
• **YI, Xiaogang**
**Hunan 410100 (CN)**

(74) Representative: **Schmitz, Alexander**
**Maiwald Patentanwalts GmbH**
**Elisenhof**
**Elisenstrasse 3**
**80335 München (DE)**

(56) References cited:
CN-A- 1 524 150      CN-A- 1 678 806
CN-A- 101 292 072    CN-A- 101 633 168
US-A- 5 065 326      US-A- 5 835 874

## Description

This application claims the benefit of Chinese Patent Application No.200910161663.0, entitled "METHOD AND SYSTEM FOR CONTROLLING LARGE-SCALE ENGINEERING MANIPULATOR" filed on July 28, 2009 with State Intellectual Property Office of P.R.C., which has been published with the number CN 101633168.

## FIELD OF THE INVENTION

The present disclosure relates to large-scale engineering machinery, and particularly to a method and a system for controlling a large-scale engineering manipulator.

## BACKGROUND OF THE INVENTION

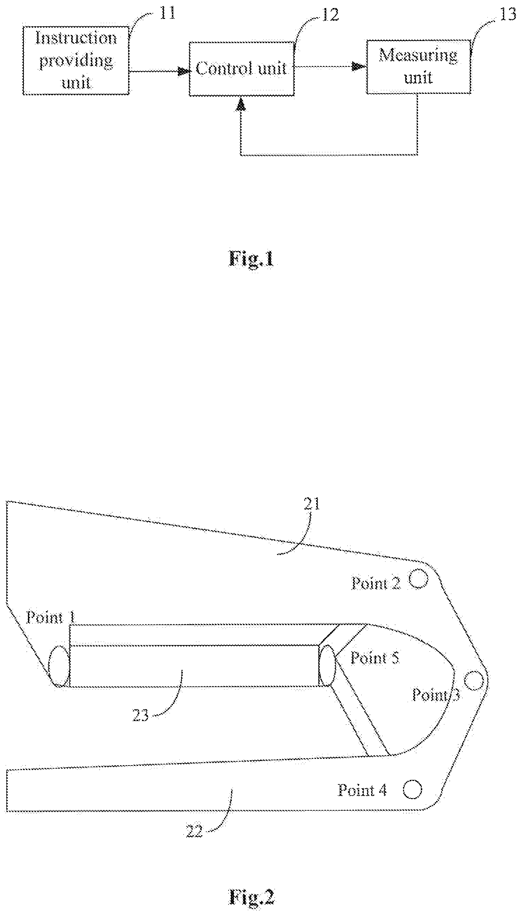

The document US 5,056,326 A relates to a control system and method which automatically controls a work implement of an excavating machine to perform a complete excavation work cycle.
For various large-scale engineering machineries, particularly for engineering machineries with several boom segments or bending mechanical arms, such as a concrete pump truck, a crane, an excavator and the like, precise control of a manipulator is required to meet the operating requirement. Fig.1 shows a system for controlling a large-scale engineering manipulator in the prior art, which includes an instruction providing unit 11, a control unit 12 and a measuring unit13.
The instruction providing unit 11 obtains a control instruction from an operator, and sends the control instruction to the control unit 12. The control instruction may be a required rotation angle of the large-scale machinery manipulator or a position the manipulator needed to reach, and so on.
The control unit 12 receives the control instruction, obtains a control amount through a certain control algorithm, and sends the control amount to a driving mechanism which drives the movement of the manipulator according to the control amount.
The measuring unit 13 acquires relevant physical quantities of the manipulator, and sends the relevant physical quantities to the control unit 12 as feedback quantities of the control algorithm to improve the control accuracy.
Generally, the driving mechanism of the large-scale engineering manipulator is a hydraulic cylinder, and a direct physical amount needed to be controlled is usually a displacement of the hydraulic cylinder. The measuring unit 13 detects a rotation angle of a boom segment mounted with the hydraulic cylinder, and sends the rotation angle to the control unit 12. The control unit 12 calculates a displacement of the driving mechanism according to the rotation angle of the boom segment and calculates a relevant control amount according to the displacement of the driving mechanism and the control instruction.
Fig.2 shows a structural relationship between boom segments and a hydraulic cylinder of a large-scale engineering manipulator, in which a rotary encoder is provided at the corner between a boom segment 21 and a boom segment 22 to acquire a rotation angle of an included angle 234 between the boom segment 21 and the boom segment 22, and to calculate a displacement of an hydraulic cylinder 23 according to the rotation angle. From Fig.2, it can be seen that the displacement of the hydraulic cylinder 23 is the distance between point 1 and point 5.
The calculation equations are as follows:

$$d24=\text{sqrt}(d23*d23+d34*d34-2*d23*d34*\cos(ang234)); \qquad \text{equation 1}$$

$$ang324=\text{acos}((d24*d24+d23*d23-d34*d34)/(2*d24*d23)); \qquad \text{equation 2}$$

$$ang325=\text{acos}((d24*d24+d25*d25-d54*d54)/(2*d24*d25))+ang324; \qquad \text{equation 3}$$

$$ang125=ang123-ang325; \qquad \text{equation 4}$$

$$d15=\text{sqrt}(d12*d12+d25*d25-2*d12*d25*\cos(ang125)); \qquad \text{equation 5}$$

where'd' indicates the distance between two points, for instance, 'd24' indicates the distance between point 2 and point 4, and 'd34' indicates the distance between point 3 and point 4; 'ang' indicates an angle, for instance, 'ang324' indicates an included angle between the line segment from point 3 to point 2 and the line segment from point 2 to point 4; for example, 'ang125' indicates an included angle between the line segment from point 1 to point 2 and the line segment from point 2 to point 5; and 'sqrt' means square root.

Although, the displacement of the hydraulic cylinder 23 can be acquired in this manner, the detecting accuracy of the rotary encoder may be affected greatly by temperature and when the temperature of the driving mechanism varies greatly, the include angle 234 detected by the rotary encoder may have a greater error which leads to a great error of the calculated displacement of the hydraulic cylinder and makes it difficult for the control mechanism to achieve accurate control of the manipulator.

## SUMMARY OF THE INVENTION

An object of the present disclosure is to provide a method for controlling a large-scale engineering manipulator, by which the manipulator can be controlled accurately.

Another object of the present disclosure is to provide a system for controlling a large-scale engineering manipulator, by which the manipulator can be controlled accurately.

Features of one aspect of the present invention are provided in the independent claims. The present disclosure relates to a method for controlling a large-scale engineering manipulator, each of boom segments of the manipulator being provided with a driving mechanism, which is capable of driving the boom segment to rotate in a given angle range, where the method includes: acquiring a current displacement of the driving mechanism, and obtaining a control instruction; calculating a required displacement of the driving mechanism according to the current displacement and the control instruction; and controlling the driving mechanism according to the required displacement to drive a movement of the manipulator.

According to the invention, the process of calculating the required displacement of the driving mechanism according to the current displacement and the control instruction includes: converting the current displacement into a current rotation angle of the boom segment; extracting from the control instruction coordinate data of a location where the boom segment needs to reach, and calculating, based on the current rotation angle, a required rotation angle of the boom segment corresponding to the coordinate data; and converting the required rotation angle of the boom segment into the required displacement of the driving mechanism.

According to the invention, the driving mechanism is a hydraulic cylinder, in which a displacement sensor is provided for acquiring the current displacement of the hydraulic cylinder.

The present disclosure further provides a system for controlling a large-scale engineering manipulator, each of boom segments of the manipulator being provided with a driving mechanism, which is capable of driving the boom segment to rotate in a given angle range, where the system includes: a displacement acquiring unit, a control instruction obtaining unit, a control amount calculating unit and a control driving unit, where: the displacement acquiring unit is configured to acquire a current displacement of the driving mechanism; the control instruction obtaining unit is configured to obtain a control instruction; the control amount calculating unit is configured to calculate a required displacement of the driving mechanism according to the current displacement and the control instruction; and the control driving unit is configured to control the driving mechanism according to the required displacement to drive a movement of the manipulator.

According to the invention, the control amount calculating unit includes a current rotation angle calculating sub-unit, a required rotation angle calculating sub-unit and a required displacement calculating sub-unit, where: the current rotation angle calculating sub-unit is configured to convert the current displacement into a current rotation angle of the boom segment; the required rotation angle calculating sub-unit is configured to extract from the control instruction coordinate data of a location where the boom segment needs to reach, and to calculate, based on the current rotation angle, a required rotation angle of the boom segment corresponding to the coordinate data; the required displacement calculating sub-unit is configured to convert the required rotation angle of the boom segment into the required displacement of the driving mechanism.

According to the invention, the driving mechanism is a hydraulic cylinder, in which a displacement sensor is provided for acquiring the current displacement of the hydraulic cylinder.

Compared with the prior art, the present disclosure has following advantages:

According to the present disclosure, the current displacement of the driving mechanism is acquired, and the accurate control of a manipulator can be achieved based on the current displacement, the structural characteristics of the manipulator and a control instruction. Compared with encode sensors, displacement sensors for acquiring the displacement of a hydraulic cylinder are less influenced by temperature. When the ambient temperature varies greatly, the detecting accuracy of such a displacement sensor is less affected and a detecting error of the current displacement is small, and thus the manipulator can be controlled accurately. In the present disclosure, a displacement sensor is provided in a hydraulic cylinder, which not only improves the reliability and the integration of the system, but also achieves a closed loop control of the hydraulic cylinder thereby improving the control performance of the system.

## BRIEF DESCRIPTION OF THE DRAWINGS

Fig.1 is a schematic diagram of a system for controlling a large-scale engineering manipulator in the prior art;
Fig.2 is a structural schematic diagram of a hydraulic cylinder and boom segments of the large-scale engineering manipulator in the prior art;
Fig.3 is a flow diagram of a first embodiment of a method for controlling a large-scale engineering manipulator according to the present disclosure;
Fig.4 is a structural schematic diagram of a biaxial manipulator according to the present disclosure;
Fig.5 is a flow diagram of a first embodiment of a system for controlling the large-scale engineering manipulator according to the present disclosure; and
Fig.6 is a flow diagram of a second embodiment of the system for controlling the large-scale engineering manipulator according to the present disclosure.

## DETAILED DESCRIPTION OF THE INVENTION

The present disclosure is further illustrated in detail hereinafter with the attached drawings and embodiments, so as to make the above-mentioned objections, features and advantages more understandable.

The present disclosure acquires a current displacement of a driving mechanism of a manipulator, calculates a required rotation angle of the manipulator based on the current displacement and information of a location that the manipulator needs to reach in a control instruction, calculates a required displacement of the driving mechanism of the manipulator based on the required rotation angle of the manipulator, and controls the driving mechanism and drives the manipulator to move to a designated location, thereby achieving the accurate control of the manipulator.

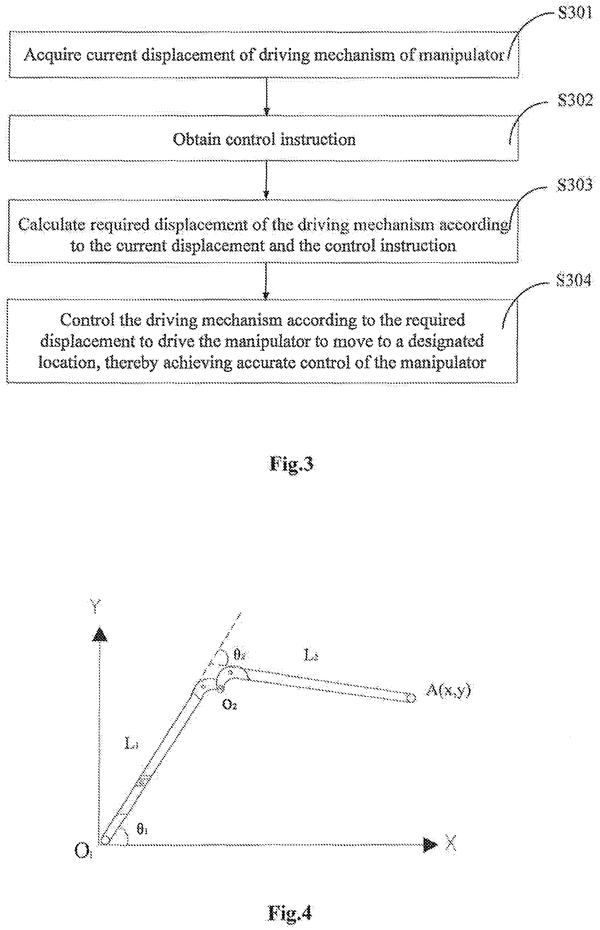

Fig.3 shows a first embodiment of a method for controlling the large-scale engineering manipulator, which includes the steps of S301-S304.

S301: Acquiring a current displacement of a driving mechanism of the manipulator. The driving mechanism is a hydraulic cylinder. In the present disclosure, a displacement sensor is provided in the hydraulic cylinder for acquiring the current displacement of the driving mechanism.

S302: Obtaining a control instruction. A control instruction input by an operator is obtained, which may be a spatial location where the manipulator needs to reach and the like, such as moving from point A(X,Y) to point A'(X',Y').

S303: Calculating a required displacement of the driving mechanism according to the current displacement and the control instruction. A current rotation angle of the manipulator is calculated according to the current displacement and the mechanical structure of the manipulator; a required rotation angle of the driving mechanism of the manipulator is calculated according to the information of a location that the manipulator needs to reach from the control instruction and the mechanical structure of the manipulator, and the required rotation angle is converted into the required displacement.

S304: Controlling the driving mechanism according to the required displacement to drive the manipulator to move to a designated location, thereby achieving an accurate control of the manipulator.

The present disclosure implements the accurate control of the manipulator according to the acquired current displacement of the driving mechanism, the current displacement, the structural characteristics of the manipulator and the control instruction. Compared with the rotary encoder, the displacement sensor for acquiring the displacement of the hydraulic cylinder is less affected by temperature, so that the detecting accuracy is higher and the detecting errors are small, thereby achieving the accurate control of the manipulator.

The displacement sensor is provided in the hydraulic cylinder according to the present disclosure, which not only improves the reliability and integration of the system, but also achieves a closed loop control of the hydraulic cylinder, thereby improving the control performance of the system.

According to the present disclosure, the manipulator may be a manipulator with several boom segments, or a biaxial manipulator or a single-axis manipulator. A biaxial manipulator is taken as an example to describe how to control the manipulator accurately by acquiring the displacement of the driving mechanism of the manipulator.

Fig.4 shows a schematic diagram of a biaxial manipulator, so as to illustrate the control of the biaxial manipulator as an example.

Two boom segments of the biaxial manipulator can rotate around joint O1 and joint 02 respectively. It is given that the length between O1 and O2 is L1 and the length between 02 and point A is L2, the rotation angles of the joints O1 and O2 are Q1 and Q2 respectively, and an end point is A(x, y), then equations of motion of the manipulator can be established according to a geometrical analysis method, in which,

$$x = l_1 \cos\theta_1 + l_2 \cos(\theta_1 + \theta_2) \qquad \text{equation 6}$$

$$y = l_1 \sin\theta_1 + l_2 \sin(\theta_1 + \theta_2) \qquad \text{equation 7}$$

According to the present disclosure, the respective current displacements of driving mechanisms of two boom segments of the blaxial manipulator are acquired by displacement sensors. The structural relationship between the driving mechanisms and the two boom segments is shown in Fig.2. The current rotation angles of the two boom segments are calculated based on the current displacements of the driving mechanisms with the following calculation equations:

$$\text{ang125} = \text{acos}((d12^2 + d25^2 - d15^2)/(2*d12*d25)); \qquad \text{equation 8}$$

$$\text{ang325} = \text{ang123} - \text{ang125}; \qquad \text{equation 9}$$

$$\text{d35} = \text{sqrt}(d23*d23 + d25*d25 - 2*d23*d25*\cos(\text{ang325})); \qquad \text{equation 10}$$

$$\text{ang235} = \text{acos}((d23^2 + d35^2 - d25^2)/(2*d23*d35)); \qquad \text{equation 11}$$

$$\text{ang435} = \text{acos}((d35^2 + d34^2 - d45^2)/(2*d35*d34)); \qquad \text{equation 12}$$

$$\text{ang234} = (\text{ang235} + \text{ang435})*180/\text{pi}; \qquad \text{equation 13}$$

where, 'd' indicates a distance between two points, such as 'd24' indicates the distance between point 2 and point 4, and 'd34' indicates the distance between point 3 and point 4; 'ang' indicates an angle, for example 'ang324' indicates an included angle between the line segment from point 3 to point 2 and the line segment from point 2 to point 4, and 'ang125' indicates an included angle between the line segment from point 1 to point 2 and the line segment from point 2 to point 5; and 'pi' indicates $\pi$. If 'd15' is L1, 'ang234' is Q1 in Fig.4; and if 'd15' is L2, 'ang234' is Q2 in Fig.4.

The location A' $(x', y')$ where the biaxial manipulator needs to reach is acquired from a control instruction. It is supposed that the required rotation angles of the two boom segments of the biaxial manipulator are $Q'_1$ and $Q'_2$ respectively, and the following equations are derived from equation 6 and equation 7,

$$x'^2 + y'^2 = l_1^2 + l_2^2 + 2l_1 l_2 \left[ \cos\theta'_1 \cos(\theta'_1 + \theta'_2) + \sin\theta'_1 \sin(\theta'_1 + \theta'_2) \right]$$
$$= l_1^2 + l_2^2 + 2l_1 l_2 \cos\theta'_2 \qquad \text{equation 14}$$

$$\theta'_1 = \arctan\left(\frac{y'}{x'}\right) - \arccos\left(\frac{x'^2 + y'^2 + l_1^2 - l_2^2}{2l_1\sqrt{x'^2 + y'^2}}\right) \qquad \text{equation 15}$$

$$\theta'_2 = \arccos\left(\frac{x'^2 + y'^2 - l_1^2 - l_2^2}{2l_1 l_2}\right) \qquad \text{equation 16}$$

With the equations 1 to 5, the values of Q'1-Q1 and Q'2-Q2 are calculated, which are converted into required displacements of the driving mechanisms, D1 and D2, and the driving mechanisms control the two boom segments respectively to carry out the required displacements and drive the movement of the biaxial manipulator so as to move the manipulator from point A(X, Y) to point A'(X', Y'). During the driving process, the driving mechanisms acquire their current displacements continuously and repeat the above-mentioned calculation, thereby performing closed loop control of the driving mechanisms and improving the controlling accuracy of the manipulator.

The control principle of the present disclosure is described through the above-mentioned embodiment by taking the movement of manipulator in a two dimensional space as an example. Similarly, the location of the manipulator in a three dimensional space in a control instruction according to the present disclosure, such as A'(x', y', z'), in which x', y', z' indicate the coordinates of the location where the manipulator needs to reach, and equations of corresponding relationship between the x', y', z' and the rotation angles of the boom segments are established, so that any movements of the boom segments in the three dimensional space can be controlled based through the above-mentioned control principle.

If the manipulator has more than one boom segment, the driving mechanism of each of the boom segments shall be controlled correspondingly to implement cooperation of the each boom segment, thereby achieving the accurate control of the movement of a terminal boom segment.

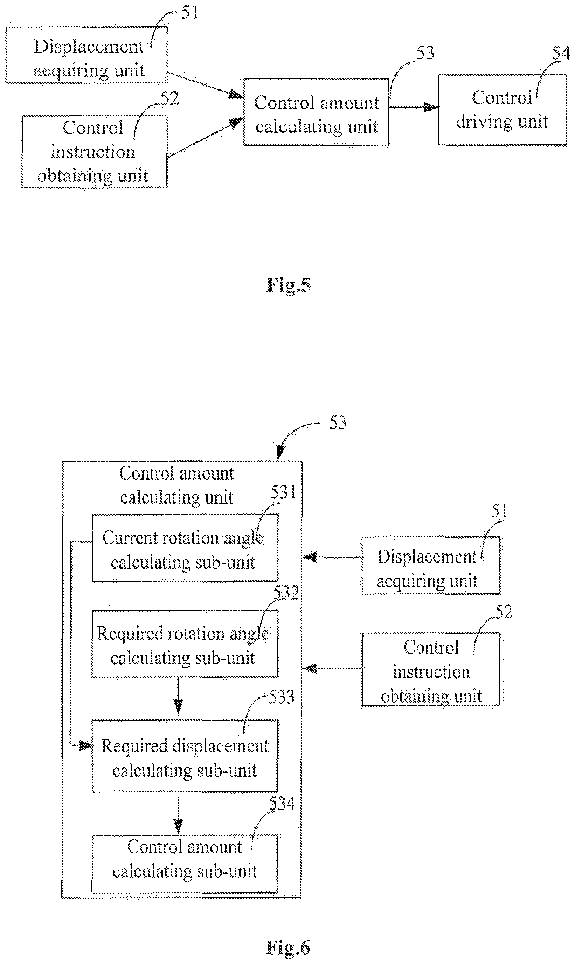

Based on the method for controlling the large-scale engineering manipulator, the present disclosure also provides a system for controlling a large-scale engineering manipulator, Fig.5 shows a first embodiment of the system for controlling a large-scale engineering manipulator, in which each boom segment of the manipulator is provided with a driving mechanism which can drive the boom segment to rotate in a given angle range. The system includes: a displacement acquiring unit 51, a control instruction obtaining unit 52, a control amount calculating unit 53 and a control driving unit 54.

The displacement acquiring unit 51 acquires a current displacement of a driving mechanism of the manipulator and sends the current displacement to the control amount calculating unit 53. If the driving mechanism is a hydraulic cylinder, the displacement acquiring unit 51 is a displacement sensor provided in the hydraulic cylinder.

The control instruction obtaining unit 52 obtains a control instruction and send the control instruction to the control amount calculating unit 53.

The control amount calculating unit 53 calculates a required displacement of the driving mechanism according to the current displacement and the control instruction, and sends the required displacement to the control driving unit 54.

The control driving unit 54 controls the driving mechanism to drive the manipulator according to the required displacement.

Fig.6 shows a second embodiment of the system for controlling the large-scale engineering manipulator. The system includes: a displacement acquiring unit 51, a control instruction obtaining unit 52, a control amount calculating unit 53 and a control driving unit 54, in which the control amount calculating unit 53 includes: a current rotation angle calculating sub-unit 531, a required rotation angle calculating sub-unit 532 and a required displacement calculating sub-unit 533.

The current rotation angle calculating sub-unit 531 converts a current displacement into a current rotation angle of a boom segment and sends the current rotation angle to the required rotation angle calculating sub-unit 532.

The required rotation angle calculating sub-unit 532 extracts coordinate data of a location where the boom segment needs to reach from a control instruction, calculates a required rotation angle corresponding to the coordinate data based on the current rotation angle, and sends the required rotation angle to the required displacement calculating sub-unit 533.

The required displacement calculating sub-unit 533 converts the required rotation angle of the boom segment into a required displacement of a driving mechanism.

The functions of the displacement acquiring unit 51, the control instruction obtaining unit 52, and the control driving unit 54 are the same as those in the embodiment as shown in Fig.5 and are not described here in detail.

The method and system for controlling a large-scale engineering manipulator according to the present disclosure has been described in detail hereinabove, and the principles and the embodiments of the present disclosure are illustrated by way of specific examples, which are only intended to help the understanding of the method and the concept of the present disclosure. In a word, the above description should not be interpreted as limitation of the present disclosure. The extent of the protection of the present invention is defined by the appended claims.

**Claims**

1. A method for controlling a large-scale engineering manipulator, each of boom segments (21, 22) of the manipulator being provided with a driving mechanism (23), which is capable of driving the boom segment to rotate in a given angle range, wherein the method comprises:

   acquiring a current displacement of the driving mechanism, and obtaining a control instruction;
   calculating a required displacement of the driving mechanism according to the current displacement and the control instruction; and

controlling the driving mechanism according to the required displacement to drive a movement of the manipulator, **characterized in that**:

the process of calculating the required displacement of the driving mechanism (23) according to the current displacement and the control instruction comprises:

converting the current displacement into a current rotation angle of the boom segment (21,22);

extracting from the control instruction coordinate data of a location where the boom segment needs to reach, and calculating, based on the current rotation angle, a required rotation angle of the boom segment (21, 22) corresponding to the coordinate data; and

converting the required rotation angle of the boom segment into the required displacement of the driving mechanism (23);

wherein the driving mechanism (23) is a hydraulic cylinder, in which a displacement sensor is provided for acquiring the current displacement of the hydraulic cylinder.

2. A system for controlling a large-scale engineering manipulator, each of boom segments (21, 22) of the manipulator being provided with a driving mechanism (23), which is capable of driving the boom segment (21, 22) to rotate in a given angle range, wherein the system comprises: a displacement acquiring unit (51), a control instruction obtaining unit (52), a control amount calculating unit (53) and a control driving unit (54), wherein:

the displacement acquiring unit (51) is configured to acquire a current displacement of the driving mechanism;

the control instruction obtaining unit (52) is configured to obtain a control instruction;

the control amount calculating unit (53) is configured to calculate a required displacement of the driving mechanism (23) according to the current displacement and the control instruction; and

the control driving unit (54) is configured to control the driving mechanism according to the required displacement to drive a movement of the manipulator, **characterized in that**:

the control amount calculating unit (53) comprises a current rotation angle calculating sub-unit (531), a required rotation angle calculating sub-unit (532) and a required displacement calculating sub-unit (533), wherein:

the current rotation angle calculating sub-unit (531) is configured to convert the current displacement into a current rotation angle of the boom segment;

the required rotation angle calculating sub-unit (532) is configured to extract from the control instruction coordinate data of a location where the boom segment needs to reach, and to calculate, based on the current rotation angle, a required rotation angle of the boom segment corresponding to the coordinate data;

the required displacement calculating sub-unit (533) is configured to convert the required rotation angle of the boom segment into the required displacement of the driving mechanism (23);

wherein the driving mechanism (23) is a hydraulic cylinder, in which a displacement sensor is provided for acquiring the current displacement of the hydraulic cylinder.

## Patentansprüche

1. Verfahren zum Steuern eines großen Verarbeitungsmanipulators, wobei jedes der Auslegersegmente (21, 22) des Manipulators mit einem Antriebsmechanismus (23) versehen ist, welcher in der Lage ist, das Auslegersegment anzutreiben und in einem gegebenen Winkelbereich zu drehen, wobei das Verfahren aufweist:

Erfassen einer aktuellen Auslenkung des Antriebsmechanismus und Erhalten eines Steuerbefehls;

Berechnen einer erforderlichen Auslenkung des Antriebsmechanismus gemäß der aktuellen Auslenkung und des Steuerbefehls; und

Steuern des Antriebsmechanismus gemäß der erforderlichen Auslenkung, um eine Bewegung des Manipulators hervorzurufen, **dadurch gekennzeichnet, dass**:

der Prozess der Berechnung der erforderlichen Auslenkung des Antriebsmechanismus (23) gemäß der aktuellen Auslenkung und des Steuerbefehls aufweist:

7

Umwandeln der aktuellen Auslenkung in einen aktuellen Drehwinkel des Auslegersegments (21, 22);
Extrahieren von Koordinatendaten eines Ortes aus dem Steuerfehl, welchen das Auslegersegment erreichen soll, und berechnen, basierend auf dem aktuellen Drehwinkel, eines erforderlichen Drehwinkels des Auslegersegments (21, 22) entsprechend den Koordinatendaten; und
Umwandeln des erforderlichen Drehwinkels des Auslegersegments in die erforderliche Auslenkung des Antriebsmechanismus (23);
wobei der Antriebsmechanismus (23) ein Hydraulikzylinder ist, in dem ein Auslenkungssensor zur Erfassung der aktuellen Auslenkung des Hydraulikzylinders vorgesehen ist.

2. Ein System zur Steuerung eines großen Verarbeitungsmanipulators, wobei jedes der Auslegesegmente (21, 22) des Manipulators mit einem Antriebsmechanismus (23) versehen ist, welcher in der Lage ist, das Auslegersegment (21, 22) anzutreiben und in einem gegebenen Winkelbereich zu drehen, wobei das System aufweist:

eine Auslenkungserfassungseinheit (51), eine Steuerbefehlserfassungseinheit (52),
eine Steuerbetragsberechnungseinheit (53) und eine Steuerantriebseinheit (54), wobei:

die Auslenkungserfassungseinheit (51) ausgeführt ist, eine aktuelle Auslenkung des Antriebsmechanismus zu erfassen;
die Steuerbefehlserfassungseinheit (52) ausgeführt ist, einen Steuerbefehl zu erhalten;
die Steuerbetragsberechnungseinheit (53) ausgeführt ist, eine erforderliche Auslenkung des Antriebsmechanismus (23), gemäß der aktuellen Auslenkung und dem Steuerbefehl, zu berechnen; und
die Steuerantriebseinheit (54) ausgeführt ist, den Antriebsmechanismus gemäß der erforderlichen Auslenkung zu steuern, um eine Bewegung des Manipulators hervorzurufen, **dadurch gekennzeichnet, dass**:

die Steuerbetragsberechnungseinheit (53) eine aktuelle Drehwinkelberechnungsuntereinheit (531), eine erforderliche Drehwinkelberechnungsuntereinheit (532) und eine erforderliche Auslenkungsberechnungsuntereinheit (533) aufweist, wobei:

die aktuelle Drehwinkelberechnungsuntereinheit (531) ausgeführt ist, die aktuelle Auslenkung in einen aktuellen Drehwinkel des Auslegersegments umzuwandeln;
die erforderliche Drehwinkelberechnungsuntereinheit (532) ausgeführt ist, Koordinatendaten eines Ortes aus dem Steuerbefehl zu extrahieren, welchen das Auslegersegment erreichen soll, und basierend auf dem aktuellen Drehwinkel einen erforderlichen Drehwinkel des Auslegersegments entsprechend den Koordinatendaten zu berechnen;
die erforderliche Auslenkungsberechnungsuntereinheit (533) ausgeführt ist, den erforderlichen Drehwinkel des Auslegersegments in die erforderliche Auslenkung des Antriebsmechanismus (23) umzuwandeln;
wobei der Antriebsmechanismus (23) ein Hydraulikzylinder ist, in dem ein Auslenkungssensor zur Erfassung der aktuellen Auslenkung des Hydraulikzylinders vorgesehen ist.

**Revendications**

1. Procédé pour commander un manipulateur technique de grande envergure, chacun des segments de flèche (21, 22) du manipulateur étant pourvu d'un mécanisme d'entraînement (23), qui peut entraîner le segment de flèche de manière à tourner sur une plage angulaire donnée, le procédé comportant les étapes consistant à :

acquérir un déplacement actuel du mécanisme d'entraînement, et obtenir une instruction de commande,
calculer un déplacement requis du mécanisme d'entraînement en fonction du déplacement actuel et de l'instruction de commande, et
commander le mécanisme d'entraînement en fonction du déplacement requis pour entraîner un mouvement du manipulateur, **caractérisé en ce que** :

le processus de calcul du déplacement requis du mécanisme d'entraînement (23) en fonction du déplacement actuel et de l'instruction de commande comporte les étapes consistant à :

convertir le déplacement actuel en un angle de rotation actuel du segment de flèche (21, 22),
extraire de l'instruction de commande des données de coordonnées d'un emplacement que le segment de flèche doit atteindre, et calculer, sur la base de l'angle de rotation actuel, un angle de rotation requis du segment de flèche (21, 22) correspondant aux données de coordonnées, et

convertir l'angle de rotation requis du segment de flèche en déplacement requis du mécanisme d'entraînement (23),

dans lequel le mécanisme d'entraînement (23) est un cylindre hydraulique, dans lequel un capteur de déplacement est prévu pour acquérir le déplacement actuel du cylindre hydraulique.

2. Système pour commander un manipulateur technique de grande envergure, chacun des segments de flèche (21, 22) du manipulateur étant pourvu d'un mécanisme d'entraînement (23), qui peut entraîner le segment de flèche (21, 22) de manière à tourner sur une plage angulaire donnée, dans lequel le système comporte : une unité d'acquisition de déplacement (51), une unité d'obtention d'instruction de commande (52), une unité de calcul de grandeur de commande (53) et une unité d'entraînement de commande (54), dans lequel :

l'unité d'acquisition de déplacement (51) est configurée pour acquérir un déplacement actuel du mécanisme d'entraînement,

l'unité d'obtention d'instruction de commande (52) est configurée pour obtenir une instruction de commande,

l'unité de calcul de grandeur de commande (53) est configurée pour calculer un déplacement requis du mécanisme d'entraînement (23) en fonction du déplacement actuel et de l'instruction de commande, et

l'unité d'entraînement de commande (54) est configurée pour commander le mécanisme d'entraînement en fonction du déplacement requis pour entraîner un mouvement du manipulateur, **caractérisé en ce que** :

l'unité de calcul de grandeur de commande (53) comporte une sous-unité de calcul d'angle de rotation actuel (531), une sous-unité de calcul d'angle de rotation requis (532) et une sous-unité de calcul de déplacement requis (533), dans lequel :

la sous-unité de calcul d'angle de rotation actuel (531) est configurée pour convertir le déplacement actuel en angle de rotation actuel du segment de flèche,

la sous-unité de calcul d'angle de rotation requis (532) est configurée pour extraire de l'instruction de commande des données de coordonnées d'un emplacement que le segment de flèche doit atteindre, et pour calculer, sur la base de l'angle de rotation actuel, un angle de rotation requis du segment de flèche correspondant aux données de coordonnées,

la sous-unité de calcul de déplacement requis (533) est configurée pour convertir l'angle de rotation requis du segment de flèche en déplacement requis du mécanisme d'entraînement (23),

dans lequel le mécanisme d'entraînement (23) est un cylindre hydraulique, dans lequel un capteur de déplacement est prévu pour acquérir le déplacement actuel du cylindre hydraulique.

**Fig.1**

**Fig.2**

S301

Acquire current displacement of driving mechanism of manipulator

S302

Obtain control instruction

S303

Calculate required displacement of the driving mechanism according to the current displacement and the control instruction

S304

Control the driving mechanism according to the required displacement to drive the manipulator to move to a designated location, thereby achieving accurate control of the manipulator

Fig.3

Fig.4

Displacement acquiring unit ⌐51

Control instruction obtaining unit ⌐52

Control amount calculating unit ⌐53

Control driving unit ⌐54

**Fig.5**

⌐53

Control amount calculating unit

Current rotation angle calculating sub-unit ⌐531

Required rotation angle calculating sub-unit ⌐532

Required displacement calculating sub-unit ⌐533

Control amount calculating sub-unit ⌐534

Displacement acquiring unit ⌐51

Control instruction obtaining unit ⌐52

**Fig.6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200910161663
- CN 101633168

- US 5056326 A